# EUROPEAN PATENT APPLICATION

(11) **EP 4 501 513 A1**
(43) Date of publication of application: **05.02.2025**
(21) Application number: 23779056.3
(22) Date of filing: 22.02.2023
(51) Int. Cl.: B23K 9/173, B23K 9/00

(54) **NARROW GAP GAS-SHIELDED ARC WELDING METHOD AND WELDING APPARATUS FOR NARROW GAP GAS-SHIELDED ARC WELDING**

(30) Priority: 31.03.2022 JP 2022058404
(71) Applicant: JFE Steel Corporation, Tokyo 100-0011 (JP)
(72) Inventor: KOZUKI, Shohei, Tokyo 100-0011 (JP); NAGAO, Ryota, Tokyo 100-0011 (JP)
(74) Representative: Haseltine Lake Kempner LLP
(86) International application number: PCT/JP2023/006344
(87) International publication number: WO 2023/189026

(57) **Abstract**

A high-quality weld joint is provided with high efficiency. Specifically, a narrow-gap gas-shielded arc welding method is provided, including subjecting thick steel plates each having a thickness t of 22 mm or more to multi-electrode welding with three or more electrodes as multi-layer welding, arranging a first electrode and a second electrode at positions along predetermined parallel weld lines, setting one of the first electrode and the second electrode to positive polarity, and setting the other electrode to reverse polarity, setting the distance a between the distal ends of welding wires fed from power feed tips at the distal ends of respective welding torches of the first electrode and the second electrode to 5 to 16 mm; setting the angle α between a straight line, which connects the distal ends of the respective welding wires of the first electrode and the second electrode, and a direction perpendicular to the weld lines to 60° or less, setting the diameter of the welding wire used for each electrode of the multiple electrodes to 1.0 to 1.6 mm, setting the distance between adjacent electrodes, which include the second electrode and subsequent electrode, to the range of 10 to 100 mm, setting the total amount of deposit metal per unit time by all electrodes to 200 g/min or more, and setting the melt depth p at the bottom of each thick steel plate in the direction perpendicular to the weld lines to 1.5 mm or more.

## Description

### Technical Field

The present invention relates to a gas-shielded arc welding method and to a narrow-gap gas-shielded arc welding method and a welding apparatus for performing narrow-gap gas-shielded arc welding on thick steel plates. The term "narrow gap" as used herein refers to a groove having an angle of 25° or less and where a minimum gap of the groove between thick steel plates as members to be welded is 50% or less of the thickness of the thick steel plate. In this specification, the expression "x to y" representing a range of numerical values indicates x or more and y or less, that is, both x and y are inclusive.

### Background Art

Gas-shielded arc welding, which is used to weld steel materials, is widely used in the manufacturing fields of automobiles, construction, bridges, and electrical devices, for example. In recent years, with increases in the size and thickness of steel structures, there has also been an increase in the deposited amount during welding in the production process, particularly during butt welding of steel materials. The time required for the welding has also increased. This has resulted in an increased cost of the process. Thus, applying narrow-gap gas-shielded arc welding may be considered, in which a groove with a gap that is smaller than the thickness of each of the steel plates is subjected to multi-layer welding by a gas-shielded arc welding method. The narrow-gap gas-shielded arc welding requires less deposited amount compared with ordinary gas-shielded arc welding, and thus is expected to achieve high welding efficiency and energy saving, and further reduce the cost of the welding.

Further, a technology for performing such narrow-gap gas-shielded arc welding using multiple electrodes has been recently proposed. Multi-electrode welding can increase the amount of deposited metal for filling in a groove, i.e., the amount of metal resulting from melted welding wire and adhering to the inner walls of the groove, by the number of electrodes used, achieving welding efficiency higher than that of single-electrode welding. Therefore, such welding is an effective means to contribute to welding efficiency.

For example, Patent Literature 1 describes a narrow-gap gas-shielded arc welding method for joining thick steel plates by narrow-gap multi-layer welding. The technology described in Patent Literature 1 includes using multi-electrode welding with two or more electrodes for the first-layer welding, arranging a first electrode and a second electrode at positions along predetermined parallel weld lines, controlling the distance between the distal ends of respective welding wires of the first electrode and the second electrode to be in the range of 5 to 16 mm, and controlling the angle between a straight line, which connects the distal ends of the respective welding wires of the first electrode and the second electrode, and a direction perpendicular to the weld lines to be in the range of 45° or less, thereby achieving a melt depth of 1.5 mm or more at the bottom of each thick steel plate in the direction perpendicular to the weld lines. Accordingly, even when beveling such as gas cutting or plasma arc cutting, has been applied, it is possible to achieve the effect of increasing the welding efficiency without the occurrence of defects.

### Citation List

### Patent Literature

Patent Literature 1: JP-2015-223605A

### Summary of Invention

### Technical Problem

However, when multi-electrode welding is performed with three or more electrodes using the technology of Patent Literature 1, there is a problem of causing hot cracks in the center of a weld metal.

An object of the present invention is to provide a narrow-gap gas-shielded arc welding technology that, when performing multi-electrode welding on thick steel plates using three or more electrodes, can achieve excellent welding quality and high welding efficiency without requiring treatment for groove surfaces, even when low-cost beveling has been applied. Examples of low-cost beveling include gas cutting and plasma arc cutting. Note that excellent welding quality refers to a state in which the occurrence of defects such as poor fusion and defects such as hot cracks that would occur in the center of a weld metal is prevented.

### Solution to Problem

To achieve the above object, the inventors have conducted intensive studies on the cause of hot cracks that would occur in a weld metal in multi-electrode welding with three or more electrodes. As a result, the inventors have found that when the distance between adjacent electrodes selected from a second electrode and subsequent electrodes falls out of an appropriate range, a welding defect leading to a hot crack occurs in the center of a weld metal, and that a weld joint with a high-quality bead, that is, a high-quality weld metal is obtained by adjusting the distance between the adjacent electrodes selected from the second electrode and subsequent electrodes to be in an appropriate range. The inventors have also found that when performing multi-electrode welding with three or more electrodes as multi-layer welding, by arranging a first electrode and a second electrode at positions along predetermined parallel weld lines, setting one of the first electrode and the second electrode to positive polarity and setting the other electrode to reverse polarity, appropriately adjusting the relative positions of the first electrode and the second electrode during the welding process, and setting the diameter of the welding wire used for each electrode of the multiple electrodes to a small diameter in the range of 1.0 to 1.6 mm, a total amount of deposited metal per unit time by all electrodes becomes 200 g/min or more, and a melt depth p at the bottom of each thick steel plate becomes 1.5 mm or more. Accordingly, the inventors have found it possible to perform multi-layer welding on thick steel plates with high welding efficiency.

The present invention has been completed based on the above findings and with further studies. That is, the summary of the present invention is as follows.
[1] A narrow-gap gas-shielded arc welding method for joining thick steel plates each having a thickness t of 22 mm or more and forming a groove angle θ of 25° or less and a gap G at a groove bottom in a range of 7 to 18 mm, using narrow-gap multi-layer welding, the method being characterized by including:
   performing multi-electrode welding with three or more electrodes as the multi-layer welding;
   arranging, among the multiple electrodes, a first electrode and a second electrode at positions along predetermined parallel weld lines;
   setting one of the first electrode and the second electrode to positive polarity, and setting the other to reverse polarity;
   setting a distance a between distal ends of welding wires fed from power feed tips provided at distal ends of respective welding torches of the first electrode and the second electrode to a range of 5 to 16 mm, and setting an angle α between a straight line that connects the distal ends of the respective welding wires of the first electrode and the second electrode and a direction perpendicular to the weld lines to a range of 60° or less;
   setting a diameter of the welding wire used for each electrode of the multiple electrodes to a range of 1.0 to 1.6 mm;
   setting a distance between adjacent electrodes selected from the second electrode and subsequent electrodes among the multiple electrodes to a range of 10 to 100 mm;
   optionally, setting a feed angle φ of each of the welding wires fed to the groove bottom from the respective power feed tips of the first electrode and the second electrode to a range of 0 to 15° with respect to a line perpendicular to the groove bottom;
   optionally, setting a distance d between each of side end portions at the distal ends of the respective welding wires fed from the first electrode and the second electrode and each of groove surfaces of the thick steel plates to a range of 0.5 to 3.0 mm; and
   setting a total amount of deposited metal per unit time by all electrodes to 200 g/min or more and setting a melt depth p at the bottom of each thick steel plate in the direction perpendicular to the weld lines to 1.5 mm or more.
[2] The narrow-gap gas-shielded arc welding method according to [1], further including arranging a third electrode and subsequent electrodes in a center of the groove behind the first electrode and the second electrode.
[3] The narrow-gap gas-shielded arc welding method according to [1] or [2], further including feeding welding wires, each curved to have a curvature radius in a range of 150 to 300 mm, to the respective power feed tips of the first electrode and the second electrode.
[4] The narrow-gap gas-shielded arc welding method according to [1] or [2], further including using a mixed gas containing 60 volume% or more CO₂ gas as a shielding gas for the multi-layer welding.
[5] A welding apparatus for performing narrow-gap gas-shielded arc welding that performs narrow-gap multi-layer welding on thick steel plates, each having a thickness t of 22 mm or more and having a groove angle θ of 25° or less and a gap G at the groove bottom in a range of 7 to 18 mm, characterized by including a plurality of electrodes including three or more electrodes; a plurality of welding power supplies that supply welding power to the respective electrodes; power feed tips provided at distal ends of welding torches of the respective electrodes; a plurality of welding wire feeding means for feeding welding wires to the respective electrodes; shielding gas feeding means for feeding a shielding gas; and a welding base or a welding carriage,
   in which, among the plurality of electrodes,
   a first electrode and a second electrode are connected such that one of the first electrode and the second electrode is set to positive polarity and the other is set to reverse polarity;
   each power feed tip is configured to feed a welding wire in a range of 1.0 to 1.6 mm;
   the first electrode and the second electrode are arranged at positions along predetermined parallel weld lines, and are also arranged such that a distance therebetween is in a range of 5 to 16 mm as a distance a between distal ends of the welding wires fed from the power feed tips provided at the distal ends of the welding torches of the respective electrodes, and are further arranged such that an angle α between a straight line connecting the distal ends of the welding wires fed from the power feed tips provided at the distal ends of the respective welding torches of the first electrode and the second electrode and a direction perpendicular to the weld lines is 60° or less;
   a third electrode and subsequent electrodes are arranged such that a distance between adjacent electrodes selected from the second electrode and subsequent electrodes is in a range of 10 to 100 mm; and
   optionally, the power feed tips provided at the distal ends of the respective welding torches of the first electrode and the second electrode are each inclined at an angle in a range of 0 to 15° with respect to a perpendicular line at the distal ends.
[6] The welding apparatus for performing narrow-gap gas-shielded arc welding according to [5], in which the third electrode and subsequent electrodes are arranged in the center of the groove behind the first electrode and the second electrode.
[7] The welding apparatus for performing narrow-gap gas-shielded arc welding according to [5] or [6], in which the welding wire feeding means is configured to be able to feed welding wires each curved to have a curvature radius in a range of 150 to 300 mm.
[8] The welding apparatus for performing narrow-gap gas-shielded arc welding according to [5] or [6], in which the shielding gas feeding means is configured to feed a mixed gas containing 60 volume% or more CO₂ gas as a shielding gas.

### Advantageous Effects of Invention

The narrow-gap gas-shielded arc welding method and the welding apparatus for performing narrow-gap gas-shielded arc welding according to the present invention can achieve excellent welding quality and high welding efficiency without performing treatment for the groove surface, even when low-cost beveling has been applied. In particular, defects such as poor fusion, and defects such as hot cracks that would occur in the center of a weld metal can be prevented. Thus, since multi-electrode welding with three or more electrodes is applicable to all layers for multi-layer welding, the welding process efficiency improves. The production of a weld joint by the technology according to the present invention can significantly reduce the welding process cost compared to the production of conventional weld joints, and thus is industrially advantageous. In particular, the present invention is very useful to be applied to a welding process for general structures, such as for construction, bridges, and shipbuilding.

### Brief Description of Drawings

Fig. 1 is a schematic cross-sectional view showing the shape of a groove that is suitable for a narrow-gap gas-shielded arc welding method according to an embodiment of the present invention.
Figs. 2(a) and 2(b) are views illustrating the procedures of a welding process with three electrodes according to the above embodiment, in which Fig. 2(a) is a front view, and Fig. 2(b) is a top view.
Fig. 3 is a view of an example of a cross-section of a weld joint subjected to multi-layer welding with three electrodes according to the above embodiment.
Fig. 4 is a schematic view of a welding apparatus for performing narrow-gap gas-shielded arc welding according to another embodiment of the present invention, in which Fig. 4(a) is a perspective view, with Fig. 4(b) is a front view, and Fig. 4(c) is a top view.

### Description of Embodiments

Hereinafter, embodiments of the present invention will be specifically described. Note that the drawings are only schematic and thus may differ from the actual ones. In addition, the following embodiments only describe examples of an apparatus and a method for embodying the technical idea of the present invention. Thus, the configuration of the present invention is not limited to those described below. That is, the technical idea of the present invention can be modified in various ways within the technical scope recited in the claims.

### [Shape of groove]

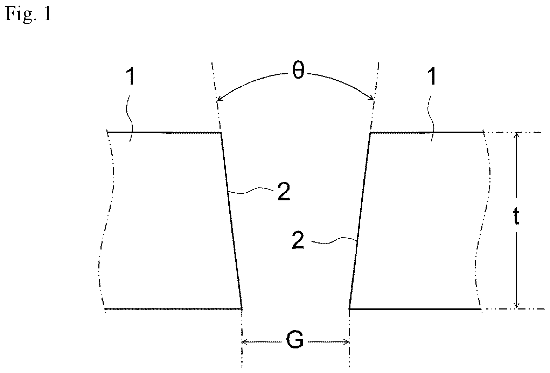

First, the shape of a groove that is suitable for a narrow-gap gas-shielded arc welding method according to an embodiment of the present invention will be described with reference to Fig. 1. In this figure, reference sign 1 denotes a thick steel plate, reference sign 2 denotes the surfaces of a groove between the thick steel plates, symbol θ denotes the groove angle, reference sign G denotes the gap at the groove bottom, and reference sign t denotes the thickness of each plate. The groove used in the present embodiment is a single V groove (Θ > 0°) or a square groove (Θ = 0°). For the single V groove, the surface having a smaller gap in the thickness direction of a plate corresponds to the bottom.

The present embodiment is a narrow-gap gas-shielded arc welding method for joining thick steel plates 1, 1 that have a groove angle θ of 25° or less and a gap G at the groove bottom in the range of 7 to 18 mm and each have a thickness t of 22 mm or more, by narrow-gap multi-layer welding. The term "thick steel plates" herein includes not only steel plates but also thick-walled materials, thick steel materials, and so on.

### - Thickness t of thick steel plate 1: 22 mm or more

The thickness t of the thick steel plate 1 is 22 mm or more. This is because when the thickness of the thick steel plates 1 is less than 22 mm, a conventional single bevel groove has a smaller cross-sectional area than the target groove of the present invention by increasing the groove angle to reduce the groove gap. Therefore, the conventional single bevel groove may require a smaller amount of weld metal, resulting in a higher welding efficiency.

Note that the plate thickness of steel structures, even inclusive of special structures, is about 200 mm at maximum. In the present embodiment, the preferable upper limit of the thickness t of the thick steel plate 1 is 200 mm. In addition, the present embodiment is applicable to various thick steel plates ranging from soft steel plates to 980 MPa grade high-tension steel plates. When the present embodiment is applied to the welding of a 590 MPa grade high-tension, thick steel plates, it is possible to perform the welding without preheating the plates.

### - Groove angle: 25° or less

The groove used in the present embodiment is a square groove or a single V groove.

The smaller the groove portion (groove angle), the higher the welding efficiency. However, when the groove portion (groove angle) is smaller, defects such as poor fusion are likely to occur. Setting the groove angle θ to 0°, that is, using a square groove is most effective from the perspective of reducing the amount of weld metal. However, a square groove would gradually close due to heat strain during welding. Thus, it is preferable to use a single V groove for which the groove angle θ has been set in accordance with the thickness t by taking into consideration the heat strain during welding.

Specifically, provided that the plate thickness t is in the range of 22 to 200 mm, preferably the groove angle θ(°) is in the range of (0.5 × t/20) to (2.0 × t/20). More preferably, it is set in the range of (0.8 × t/20) to (1.8 × t/20). Further preferably, the upper limit of the groove angle θ is set to 10°.

On the other hand, the conventional welding method is applicable to welding using a groove angle θ exceeding 25°. Therefore, in the present embodiment, the upper limit of the groove angle θ is set to 25°.

### - Gap G at groove bottom: 7 to 18 mm

When the gap G at the groove bottom is less than 7 mm, it is difficult to perform multi-electrode welding with three or more electrodes from the viewpoint of reducing the occurrence of welding defects. On the other hand, when the gap G at the groove bottom is more than 18 mm, the conventional welding method can be applied. Thus, in the present embodiment, the gap G at the groove bottom is set in the range of 7 to 18 mm. With such a range, it would be difficult to perform welding with the conventional welding method, and thus, it is expected that applying the present embodiment can further improve the welding efficiency.

### [Narrow-gap gas-shielded arc welding method]

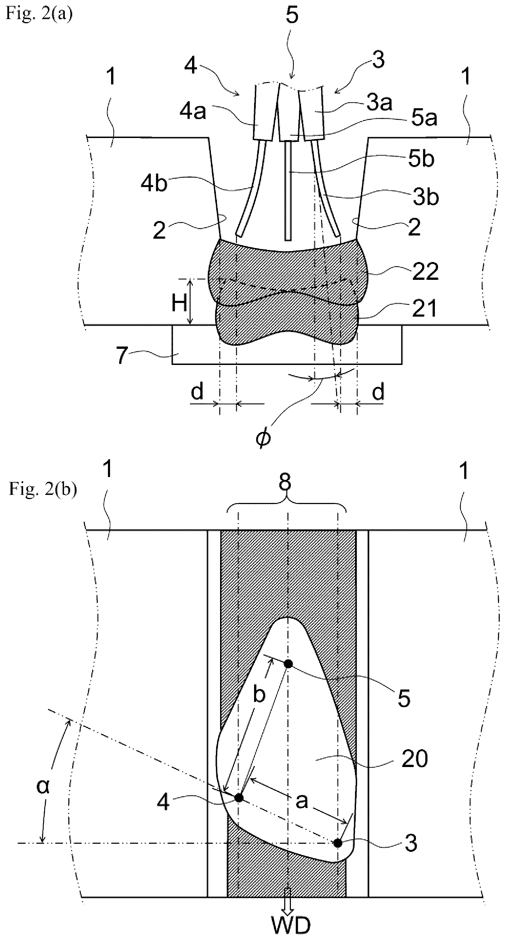

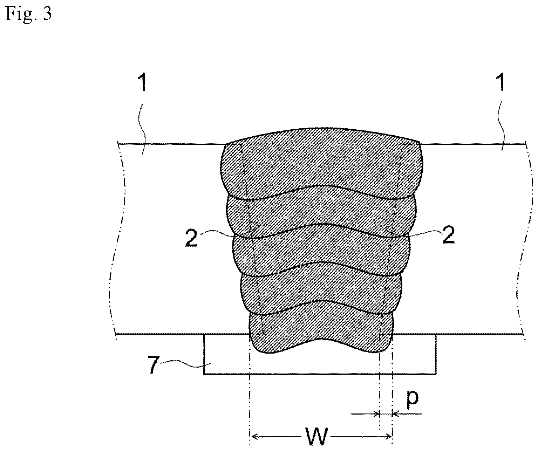

The narrow-gap gas-shielded arc welding method according to the present embodiment will be described with reference also to Figs. 2 and Fig. 3. Fig. 2 illustrates the procedures of a welding process with three electrodes according to the present embodiment. Fig. 2(a) is a front view, and Fig. 2(b) is a top view. Fig. 3 is a view of an example of a cross-section of a weld joint subjected to multi-layer welding with three electrodes. In the present embodiment, each layer following first-layer welding 21 and second-layer welding 22 is welded by multi-electrode welding with three or more electrodes, using the narrow groove with the shape described above. The welding is performed to obtain a weld joint with high welding efficiency so as to reduce the occurrence of defects such as poor fusion, and hot cracks, particularly hot cracks that would occur in the center of a weld metal.

In the present embodiment, the beveling for thick steel plates uses working including gas cutting, plasma arc cutting, or laser cutting. However, machining is not excluded. The melt depth (p shown in Fig. 3 described below) required for each groove surface in the narrow-gap gas-shielded arc welding is mainly determined by the surface quality of the groove surface 2, particularly the depth of a recess portion and the cleanliness. When the beveling is performed by the most common gas cutting, the finished cut plane greatly varies greatly depending on the gas flow rate and burner selected for gas cutting, except when using special steel, stainless steel or the like. For example, the depth of the recess portion on the groove surface is about 0.2 mm or less when the gas flow rate and the burner are properly adjusted. However, in special cases, such as a case where the flame flow rate has decreased from the usual case due to burner wear, the depth of the recess portion may exceed 1 mm. However, even when such a recess portion is formed, the groove surface is directly subjected to welding without undergoing any treatment in the case of a general structure and so on.

Therefore, in order to effectively prevent defects such as hot cracks and poor fusion, it is necessary to perform welding such that the groove surface, particularly the bottom (thick steel plate) inside the groove where the temperature tends to be lower and the melt depth tends to be smaller during the welding, is more deeply melted. Further, since the cut plane is covered with a thick oxide film resulting from the working heat, it is still necessary to melt the groove surface more deeply during welding.

In the present embodiment, therefore, the melt depth p at the bottom (thick steel plate) of the groove is set to 1.5 mm or more. Preferably, it is 2.0 mm or more. However, when the melt depth p is more than 4 mm, an undercut is formed at the upper portion of the weld bead on the groove surfaces 2, which may cause a welding defect. Therefore, the melt depth is preferably set to 4 mm or less.

In the present embodiment, it is essential to set the melt depth p at the bottom (thick steel plate) of the groove to 1.5 mm or more. In order to achieve such a melt depth p with high welding efficiency, it is crucial to appropriately control the welding conditions of the gas-shielded arc welding.

Hereinafter, the welding conditions will be described in detail.

### - Multi-electrode welding with three or more electrodes performed as multi-layer welding, and the arrangement of a first electrode and a second electrode at positions along predetermined parallel weld lines

In the present embodiment, multi-electrode welding with three or more electrodes is performed as multi-layer welding from the viewpoint of improving hot cracking resistance, particularly, reducing hot cracks that would occur in a weld metal. Preferably, four or less electrodes are used from the viewpoint of improving welding efficiency.

When narrow-gap multi-layer welding is performed with one path per layer, heat is likely to be concentrated in the center of the groove with one electrode. In such a case, the groove surface 2 of the thick steel plate 1 is not melted sufficiently, so that poor fusion (cold lap) and defects due to sputter adhering to the groove surface 2 and slag entrapment are likely to occur. In particular, during the first-layer welding 21, the temperature of the thick steel plate 1 is lower, and thus the melt depth p is smaller, which is likely to cause defects due to poor fusion. Accordingly, in the present embodiment, welding is performed by arranging, among the multiple electrodes of the three or more electrodes, the first electrode and the second electrode along predetermined parallel weld lines 8. The electrodes are numbered from a leading electrode in the welding direction WD, and subsequent electrodes are numbered in ascending order in a similar manner. As an example, Fig. 2 illustrates process procedures when multi-layer welding is performed with three electrodes. The first electrode 3 and the second electrode 4 are preferably arranged along respective weld lines 8 that are parallel to each other and are close to different groove surfaces 2.

### - Setting one of the first electrode and the second electrode to positive polarity, and setting the other electrode to reverse polarity

When the first electrode 3 and the second electrode 4 are set to the same polarity (for example, when both the first electrode 3 and the second electrode 4 are set to wire plus), their arcs are directed inward due to the attracting electromagnetic forces, so that heat is concentrated in the center of the groove. Thus, each groove surface 2 is not melted sufficiently. On the other hand, when one of the first electrode 3 and the second electrode 4 is set to wire minus (positive polarity) and the other electrode is set to wire plus (reverse polarity) and the arrangement of the first electrode 3 and the second electrode 4 is appropriately controlled, the magnetic field resulting from their welding currents produces strong outward electromagnetic forces, so that their arcs repel each other. Consequently, a sufficient melt depth p of each groove surface can be obtained.

Accordingly, in the present embodiment, one of the welding wires fed from the power feed tips at the distal ends of the respective welding torches of the first electrode and the second electrode is set to wire minus (positive polarity), and the other welding wire is set to wire plus (reverse polarity).

### - The distance a between the distal ends of the welding wires fed from the power feed tips provided at the distal ends of the respective welding torches of the first electrode and the second electrode: 5 to 16 mm

The distance a (hereinafter also simply referred to as the "first electrode-second electrode distance," see Fig. 2(b)) between the distal ends of welding wires 3b and 4b fed from power feed tips 3a and 4a at the distal ends of the respective welding torches of the first electrode 3 and the second electrode 4 is set to be in the range of 5 to 16 mm. Note that the term "distance between the distal ends of the welding wires" herein refers to the distance between the centers of the distal ends of the welding wires of the respective electrodes.

When the first electrode-second electrode distance a is less than 5 mm, a current (electrons) flows between the electrodes, with the result that the amount of heat of arcs themselves decreases, and the groove surface 2 is not melted sufficiently. On the other hand, when the first electrode-second electrode distance a is more than 16 mm, outward electromagnetic forces between the electrodes decrease in inverse proportion to the distance. Therefore, it is impossible to obtain repulsive forces of arcs that can overcome inward electromagnetic forces resulting from currents flowing through the groove surface 2. Thus, both arcs are directed inward, causing heat to be concentrated in the center of the groove. Consequently, the groove surface 2 is not melted sufficiently.

In narrow-gap welding, the problem to be solved is to reduce welding defects due to sputter adhering to the groove surfaces 2. In this respect, by arranging the first electrode 3 and the second electrode 4 along the predetermined parallel weld lines 8 and 8, and setting one of the first electrode 3 and the second electrode 4 to positive polarity while setting the other electrode to reverse polarity, and further adjusting the first electrode-second electrode distance a to the range of 5 to 16 mm, sputter is caused to be absorbed into the respective molten metals. This can reduce the adhesion of sputter to the groove surfaces 2, and thus a high-quality weld can be obtained.

Accordingly, the distance a between the distal ends of the welding wires fed from the power feed tips provided at the distal ends of the respective welding torches of the first electrode 3 and the second electrode 4 is adjusted to be in the range of 5 to 16 mm. In order to melt the groove surfaces 2 more deeply and stably by stronger repulsion of arcs, it is preferable to adjust the first electrode-second electrode distance a to be in the range of 5 to 8 mm.

### - The angle α between a straight line connecting the distal ends of the respective welding wires of the first electrode and the second electrode, and a direction perpendicular to the weld lines: 60° or less

In the present embodiment, the groove surface 2 is melted using the repulsion of arcs. When the angle α (hereinafter also simply referred to as the "first electrode-second electrode arrangement angle," see Fig. 2(b)) between a straight line connecting the distal ends of the respective welding wires of the first electrode and the second electrode, and a direction perpendicular to the weld lines is more than 60°, sufficient repulsive forces of arc cannot be obtained, so that the groove surface 2 cannot be sufficiently melted. Thus, the first electrode-second electrode arrangement angle α is limited to the range of 60° or less. More preferably, the first electrode-second electrode arrangement angle α is 45° or less. Note that the first electrode-second electrode arrangement angle α may be 0°.

### - The diameter D of each welding wire: 1.0 to 1.6 mm

A typical welding wire used for gas-shielded arc welding is produced to have a diameter within the range of 0.6 to 2.0 mm. Provided that welding is performed with the same amount of welding current, a higher deposition rate is obtained by the Joule heat as the wire diameter D is smaller. Therefore, it is preferable to select a relatively small wire diameter D to achieve a highly efficient welding process. On the other hand, when the wire diameter D is too small, the welding wire becomes soft due to the Joule heat, resulting in unstable welding. In view of such points, the diameter D of each welding wire is set in the range of 1.0 to 1.6 mm. Preferably, the diameter D of each welding wire is set in the range of 1.2 to 1.4 mm. In the present embodiment, the same type of welding wire is used for all of the multiple electrodes.

Note that the welding wire used in the present embodiment is preferably selected from various steel wires having a diameter D in the above range and corresponding to the steel grade of the thick steel plates 1 as the materials to be welded, for example, various steel wires defined by JIS Z 3312.

### - The total amount of deposit metal per unit time by all electrodes: 200 g/min or more

In order to perform welding with high efficiency, it is effective to increase the amount of deposited metal per layer. In the present embodiment, welding is performed by using the welding wires described above and setting the total amount of deposited metal per unit time by all electrodes to 200 g/min or more to perform welding with higher efficiency than the conventional method. When the amount of deposited metal per unit time is less than 200 g/min, welding requires a longer time. In typical gas-shielded arc welding with a single electrode, the amount of deposited metal per unit time is about 60 to 160 g/min, though it varies with the wire diameter D and the amount of welding current. The deposition rate according to the present embodiment is about twice that of conventional single-electrode welding.

### - The distance between adjacent electrodes from the second electrode onward: 10 to 100 mm

To prevent the formation of hot cracks, it is essential to control the heat source of arcs generated from the third electrode 5 onward within an optimal range. When the distance between adjacent electrodes selected from the second electrode 4 and subsequent electrodes is too small, the input heat is concentrated in the central portion of a weld metal, increasing the likelihood of hot cracks occurring during the solidification of the metal. On the other hand, when the distance between adjacent electrodes selected from the second electrode 4 and subsequent electrodes is too large, the interaction between the electrodes becomes too small, and thus the molten pool 20 becomes too long in the longitudinal direction or separated from each other, so that hot cracks are likely to occur during the solidification of the molten pool 20. Accordingly, in the present embodiment, the distance between the adjacent electrodes (i.e., electrode-electrode distance) selected from the second electrode and subsequent electrodes is limited to the range of 10 to 100 mm to prevent hot cracks. Preferably, the distance is in the range of 20 to 80 mm.

The welding conditions described above are the basic welding conditions of the present embodiment. By performing welding under such conditions, it is possible to obtain a weld joint in which hot cracks in a weld metal portion are prevented, even when multi-electrode welding is performed with three or more electrodes for each layer, and which has a melt depth p of 1.5 mm or more at the bottom of the thick steel plate in the direction perpendicular to the weld lines.

Note that in the present embodiment, when the following welding conditions are further satisfied in addition to the basic welding conditions, it is possible to stably increase the melt depth p from the groove surface 2 at the bottom of the thick steel plate 1 within the narrow groove.

### - The feed angle φ of each welding wire fed to the groove at the bottom from the respective power feed tips of the first electrode and the second electrode: 0 to 15° with respect to a line perpendicular to the groove at the bottom

An arc is directional and tends to be directed in the direction of the distal end of an electrode (a welding wire) is pointing. In order to effectively utilize such directivity of an arc to melt the groove surface, it is advantageous to arrange the electrode such that its distal end is directed to the groove surface 2. The direction in which the distal end of the electrode faces greatly varies depending on the feed angle of the welding wire fed from the power feed tip at the distal end of the welding torch. Hereinafter, regarding the feed angle φ of each of the welding wires 3b and 4b fed to the groove at the bottom from the power feed tips 3a and 4a of the first electrode 3 and the second electrode 4, respectively, the outward direction, that is, in a direction toward the groove surface 2 is referred to as a "positive direction," while the inward direction is referred to as a "negative direction." When the feed angle φ of each of the welding wires 3b and 4b fed from the power feed tips 3a and 4a at the distal ends of the respective welding torches with respect to the groove bottom is less than 0° with respect to the perpendicular line, that is, in a state where the distal ends of the welding wires 3b and 4b of the first electrode 3 and the second electrode 4, respectively, are closer to each other, a current flows through a path with lower resistance. Consequently, an arc creeps up the wire as the electrode (creeping up of an arc), which makes it difficult to maintain the melting of the target groove surface 2, particularly at the bottom. On the other hand, when the feed angle φ of each of the welding wires fed from the power feed tips at the distal ends of the respective welding torches with respect to the groove at the bottom is more than 15° with respect to the perpendicular line, an arc faces the groove surface 2 too directly, and thus the resulting weld bead has a projecting shape, and arc melting during the welding at the first layer 21 and onward becomes insufficient, so that welding defects are likely to occur. Therefore, the feed angle φ of each of the welding wires 3b and 4b of the first electrode 3 and the second electrode 4, respectively, with respect to the groove at the bottom is preferably in the range of 0 to 15° with respect to the perpendicular line. More preferably, the feed angle φ is in the range of 5 to 12°. Note that the feed angle φ of each of the welding wires 3b and 4b of the first electrode 3 and the second electrode 4, respectively, with respect to the groove at the bottom is the same as the tilt of each of the power feed tips 3a and 4a, particularly each of the distal ends of the power feed tips. Thus, it is possible to control the feed angle of each welding wire by controlling the tilt of the distal end of each power feed tip.

### - The distance d between each of side end portions at the distal ends of the respective welding wires fed from the first electrode and the second electrode and each of the groove surfaces of the thick steel plates: 0.5 to 3.0 mm

Within the groove bottom, when the distance between each of side end portions at the distal ends of the welding wires 3b and 4b and each of the groove surfaces 2 of the thick steel plates 1 is less than 0.5 mm, an arc is generated between the upper portion of the wire and the groove surface 2, making it impossible to efficiently melt the groove surface 2 at the bottom of the thick steel plate. On the other hand, when the distance is more than 3.0 mm, an arc is generated at a position away from the groove surface 2, making it impossible to melt the groove surface 2 efficiently. Therefore, the distance d between each of the side end portions at the distal ends of the welding wires 3b and 4b and each of the groove surfaces 2 of the thick steel plates 1 is preferably set in the range of 0.5 to 3.0 mm. More preferably, the distance d is set in the range of 0.5 to 2.0 mm, and more preferably in the range of 0.5 to 1.0 mm. As used herein, the expression "side end portions at the distal ends of the welding wires" refers to the side end portions near the groove surfaces 2 of the respective thick steel plates 1 to be melted with the electrodes 3 and 4.

### - The curvature radius R of each of the welding wires fed to the respective power feed tips of the first electrode and the second electrode: 150 to 300 mm

In the present embodiment, to control the feed angle φ of each of the welding wires 3b and 4b to be fed from the power feed tips 3a and 4a at the distal ends of the respective welding torches of the first electrode 3 and the second electrode 4, each of the power feed tips 3a and 4a with a curved distal end is used. At this time, since the welding wires 3b and 4b respectively pass through the power feed tips 3a and 4a with curved distal ends, it is preferable to curve the welding wires 3b and 4b in advance using a so-called three-point roller, for example, so that the welding wires 3b and 4b can pass more smoothly.

When the curvature radius R of the respective welding wires 3b and 4b is less than 150 mm, the feed resistance of the wire increases. Thus, it is impossible to stably feed the welding wires 3b and 4b, and it is thus difficult to maintain arcs. On the other hand, when the curvature radius R of the respective welding wires 3b and 4b is more than 300 mm, there is no effect of reducing the feed resistance of the wire with the distal ends of the power feed tips 3a and 4a being curved. Thus, it is still impossible to stably feed the welding wires 3b and 4b, and thus difficult to maintain arcs. Accordingly, the curvature radius R of the respective welding wires 3b and 4b fed to the power feed tips 3a and 4a of the first electrode 3 and the second electrode 4 is preferably set in the range of 150 to 300 mm. More preferably, the curvature radius R is set in the range of 175 to 275 mm.

### - The third electrode and subsequent electrodes: arranged in the center of the groove behind the first electrode and the second electrode

When the weld deposit height H is more than the gap G at the groove bottom, that is, when H/G is more than 1, the risk of hot cracks increases. In order to avoid this, it is effective to arrange the third electrode 5 and subsequent electrodes in the center of the groove behind the first electrode 3 and the second electrode 4 with respect to the welding direction WD. This can further reduce the number of stacked layers, and thus can significantly reduce the risk of defects in the stacked layers due to the multi-layer welding. Note that the polarity of each of the third electrode 5 and subsequent electrodes is not limited to a particular polarity, and may be either wire minus (positive polarity) or wire plus (reverse polarity). Note that the term "center of the groove" may include 10% of the gap G of the groove on both sides of the center line 81 of the groove, when viewed from above.

### - A shielding gas: a mixed gas containing 60 volume% or more CO₂ gas

The oxygen content in a weld metal is significantly influenced by the ingredient composition of a shielding gas. Thus, in the present embodiment, it is preferable to use a mixed gas containing 60 volume% CO₂ or more and the balance being an inert gas such as Ar, as a shielding gas used for gas-shielded arc welding. The content of CO₂ gas of 100 volume% is more preferable. Note that in the present embodiment, it is preferable to increase the oxygen concentration in the weld metal, which dominates the flow of the weld metal, and control forced convection in the weld metal to be in the outward direction from the center so as to stably increase the melt depth p at the bottom of each thick steel plate within the groove.

Note that conditions other than the above conditions need not be limited and may follow the usual manner. For example, the welding current may be set in the range of 280 to 360 A, the welding voltage, which rises with the current, in the range of 32 to 37 V, the welding rate to 30 to 90 cm/min, the wire extension length to 15 to 30 mm, and the welding heat input per path to 10 to 50 kJ/cm.

### [Welding apparatus]

Next, a welding apparatus that is suitably used in the present embodiment (hereinafter referred to as "the present apparatus") will be described.

The present apparatus is a welding apparatus for narrow-gap gas-shielded arc welding that joins thick steel plates each having a thickness of 22 mm or more by narrow-gap multi-layer welding, using a multi-electrode gas-shielded welding method with three or more electrodes according to the foregoing embodiment. The term "narrow gap" as used herein refers to a single V groove in which the angle θ of the groove is 25° or less (Θ > 0°) as shown in Fig. 1 or a square groove (Θ = 0°) in which the gap G of the groove at the bottom is in the range of 7 to 18 mm.

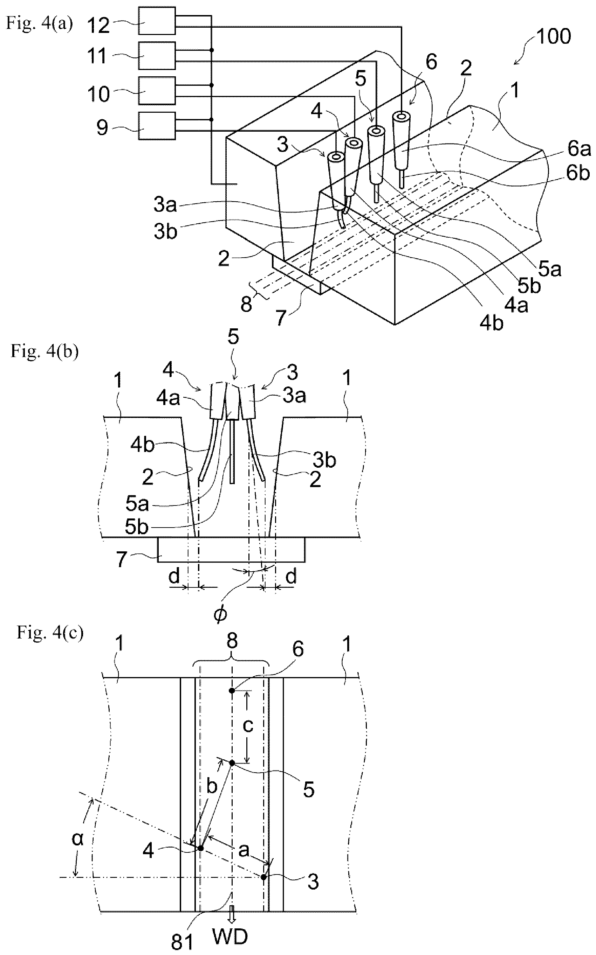

Fig. 4 shows a schematic view of the configuration of the present apparatus when four electrodes are used. Fig. 4(a) is a perspective view, Fig. 4(b) is a front view, and Fig. 4(c) is a top view.

A welding apparatus 100 according to the present apparatus includes a welding base or a welding carriage (not shown), a plurality of electrodes 3 to 6 including three or more electrodes, a plurality of welding power supplies 9 to 12 that respectively feed welding power to the plurality of electrodes 3 to 6, power feed tips 3a to 6a provided at the distal ends of respective welding torches of the plurality of electrodes 3 to 6, a plurality of welding wire feeding means (not shown) for respectively feeding welding wires 3b to 6b to the plurality of electrodes 3 to 6, and a shielding gas feeding means (not shown) for feeding a shielding gas.

In the welding apparatus 100, among the plurality of electrodes, the first electrode 3 and the second electrode 4 are connected such that one of the first electrode 3 and the second electrode 4 is set to wire minus (positive polarity) and the other electrode is set to wire plus (reverse polarity). The power feed tips 3a to 6a are each configured to feed the welding wires 3b to 6b, each having a diameter in the range of 1.0 to 1.6 mm. The first electrode 3 and the second electrode 4 are arranged at positions along the predetermined parallel weld lines 8 and 8, respectively, and are also arranged such that the distance a between the distal ends of the welding wires 3b and 4b fed from the power feed tips 3a and 4a provided at the distal ends of the welding torches of the respective electrodes is in the range of 5 to 16 mm, as the distance between the first electrode 3 and the second electrode 4. Further, the first electrode 3 and the second electrode 4 are arranged such that the angle α between a straight line, which connects the distal ends of the welding wires 3b and 4b fed from the power feed tips 3a and 4a provided at the distal ends of the respective welding torches of the first electrode 3 and the second electrode 4, and the direction perpendicular to the weld lines 8 is 60° or less. In addition, in the welding apparatus 100, the third electrode 5 and subsequent electrodes are provided such that the distance between adjacent electrodes selected from the second electrode 4 and subsequent electrodes is in the range of 10 to 100 mm. For example, the subsequent electrode, that is, the third electrode 5 is arranged such that the distance b between the second electrode 4 and the third electrode 5 is in the range of 10 to 100 mm as the distance between the distal ends of the welding wires 4b and 5b fed from the welding tips 4a and 5a provided at the distal ends of the respective welding torches of the electrodes 4 and 5. This is also true of the arrangement of electrodes following the third electrode 5. A fourth electrode 6 is provided such that the distance c between the third electrode 5 and the fourth electrode 6 is in the range of 10 to 100 mm.

In the welding apparatus 100 according to the present apparatus, on the welding base or the welding carriage, multiple electrodes of three or more electrodes as electrodes are provided in a narrow groove with a predetermined shape that is formed by the thick steel plates 1 as the materials to be welded and a backing material 7. Fig. 4 shows a case where four electrodes, specifically the first electrode 3, the second electrode 4, the third electrode 5, and the fourth electrode 6 are used. The welding power supplies 9, 10, 11, and 12 are connected to the respective electrodes to feed welding power thereto. Note that the first electrode 3 and the second electrode 4 are connected such that one of them is set to wire minus (positive polarity), and the other is set to wire plus (reverse polarity). The polarity of each of the third electrode 5 and subsequent electrodes is not limited to a particular polarity and may be set to either positive polarity or reverse polarity.

The power feed tips 3a, 4a, 5a, and 6a are provided at the distal ends of the respective welding torches of the electrodes 3, 4, 5, and 6, and welding currents are fed to the welding wires 3b, 4b, 5b, and 6b through the power feed tips 3a, 4a, 5a, and 6a, respectively. In addition, the welding apparatus 100 according to the present apparatus includes the welding wire feeding means (not shown) for feeding the welding wires 3b, 4b, 5b, and 6b to the respective welding torches (electrodes), and the shielding gas feeding means (not shown). Further, the welding apparatus 100 may also include a regularly used moving means (not shown) capable of moving the electrodes or the welding base at a predetermined speed. For both the welding wire feeding means and the shielding gas feeding means, regularly used means may be suitably used.

Note that each of the power feed tips 3a and 4a provided at the distal ends of the respective welding torches of the first electrode 3 and the second electrode 4 is preferably inclined outward at an angle in the range of 0 to 15° with respect to the perpendicular line at the distal end. This can stably increase the melt depth p of each groove surface 2 at the bottom. In addition, as long as the welding wire feeding means are configured to be able to feed the first electrode 3 and the second electrode 4 with the welding wires 3b and 4b, respectively, that are curved to achieve a curvature radius R in the range of 150 to 300 mm, it is easy to allow the feed angle φ of each of the welding wires 3b and 4b to be fed from the power feed tips 3a and 4a to be in the range of 0 to 15°.

Note that Fig. 4(c) shows only the distal end positions of the welding wires 3b, 4b, 5b, and 6b of the electrodes 3, 4, 5, and 6, and omits the other configurations.

The third electrode 5 and subsequent electrodes are preferably arranged in the center of the groove behind the first electrode 3 and the second electrode 4 with respect to the welding direction WD. This can reduce the occurrence of hot cracks. Note that the term "center of the groove" may include 10% of the gap G of the groove on both sides of the center line 81 of the groove, when viewed from above.

Hereinafter, the present invention will be further described by way of Example.

### Examples

Various thick steel plates 1 of the steel types (grades) and thicknesses shown in Table 1 were subjected to beveling by gas cutting to form the groove shapes shown in Table 2. Note that each groove surface 2 was not subjected to any treatment, such as grinding. The surface quality of the groove surface 2 after the beveling was measured with a laser displacement meter to determine the maximum depth of a recess portion. The results were shown in Table 2.

**Table 1**

| No. | Thick Steel Plate | | Welding Wire | Remarks |
|---|---|---|---|---|
| | Steel Type (Grade) | Plate Thickness | Type | |
| | | (mm) | | |
| 1 | 590MPa grade | 50 | YGW18 | Adaptive Example |
| 2 | 590MPa grade | 100 | YGW18 | Adaptive Example |
| 3 | 590MPa grade | 60 | YGW18 | Adaptive Example |
| 4 | 590MPa grade | 150 | YGW18 | Adaptive Example |
| 5 | 590MPa grade | 200 | YGW18 | Adaptive Example |
| 6 | 590MPa grade | 40 | YGW18 | Adaptive Example |
| 7 | 590MPa grade | 30 | YGW18 | Adaptive Example |
| 8 | 590MPa grade | 22 | YGW18 | Adaptive Example |
| 9 | 590MPa grade | 200 | YGW18 | Adaptive Example |
| 10 | 780MPa grade | 100 | G78A6 | Adaptive Example |
| 11 | 780MPa grade | 80 | G78A6 | Adaptive Example |
| 12 | 780MPa grade | 50 | G78A6 | Adaptive Example |
| 13 | 590MPa grade | 100 | YGW18 | Adaptive Example |
| 14 | 590MPa grade | 100 | YGW18 | Adaptive Example |
| 15 | 590MPa grade | 100 | YGW18 | Adaptive Example |
| 16 | 590MPa grade | 100 | YGW18 | Adaptive Example |
| 17 | 590MPa grade | 100 | YGW18 | Adaptive Example |
| 18 | 590MPa grade | 100 | YGW18 | Adaptive Example |
| 19 | 590MPa grade | 100 | YGW18 | Adaptive Example |
| 20 | 590MPa grade | 100 | YGW18 | Adaptive Example |
| 21 | 590MPa grade | 100 | YGW18 | Adaptive Example |
| 22 | 590MPa grade | 100 | YGW18 | Adaptive Example |
| 23 | 590MPa grade | 100 | YGW18 | Adaptive Example |
| 24 | 590MPa grade | 100 | YGW18 | Adaptive Example |
| 25 | 590MPa grade | 100 | YGW18 | Adaptive Example |
| 26 | 590MPa grade | 100 | YGW18 | Adaptive Example |
| 27 | 590MPa grade | 100 | YGW18 | Adaptive Example |
| 28 | 590MPa grade | 100 | YGW18 | Adaptive Example |
| 29 | 980MPa grade | 100 | G98A6 | Adaptive Example |
| 30 | 980MPa grade | 100 | G98A6 | Adaptive Example |
| 31 | 980MPa grade | 100 | G98A6 | Adaptive Example |
| 32 | 980MPa grade | 100 | G98A6 | Adaptive Example |
| 33 | 980MPa grade | 100 | G98A6 | Adaptive Example |
| 34 | 590MPa grade | 20 | YGW18 | Comparative Example |
| 35 | 590MPa grade | 100 | YGW18 | Adaptive Example |
| 36 | 590MPa grade | 100 | YGW18 | Adaptive Example |
| 37 | 590MPa grade | 100 | YGW18 | Adaptive Example |
| 38 | 590MPa grade | 100 | YGW18 | Adaptive Example |
| 39 | 590MPa grade | 100 | YGW18 | Adaptive Example |

**Table 2**

| No. | Thick Steel Plate Thickness | Groove Shape | | | Remarks |
|---|---|---|---|---|---|
| | (mm) | Groove Angle θ | Gap G at Groove Bottom | Maximum Depth of Recess Portion on Groove Surface | |
| | | (°) | (mm) | (mm) | |
| 1 | 50 | 5 | 7 | 0.5 | Invention Example |
| 2 | 100 | 2 | 8 | 1.0 | Invention Example |
| 3 | 60 | 8 | 18 | <0.2 | Invention Example |
| 4 | 150 | 2 | 12 | 10 | Invention Example |
| 5 | 200 | 0 | 10 | 1.0 | Invention Example |
| 6 | 40 | 10 | 10 | 0.3 | Invention Example |
| 7 | 30 | 15 | 8 | <0.2 | Invention Example |
| 8 | 22 | 25 | 7 | <0.2 | Invention Example |
| 9 | 200 | 0 | 16 | 1.0 | Invention Example |
| 10 | 100 | 5 | 10 | 1.0 | Invention Example |
| 11 | 80 | 6 | 12 | 0.8 | Invention Example |
| 12 | 50 | 5 | 8 | 0.5 | Invention Example |
| 13 | 100 | 5 | 10 | 10 | Invention Example |
| 14 | 100 | 5 | 10 | 10 | Invention Example |
| 15 | 100 | 5 | 10 | 10 | Invention Example |
| 16 | 100 | 5 | 12 | 10 | Comparative Example |
| 17 | 100 | 5 | 12 | 10 | Comparative Example |
| 18 | 100 | 5 | 12 | 10 | Comparative Example |
| 19 | 100 | 5 | 12 | 10 | Comparative Example |
| 20 | 100 | 5 | 12 | 10 | Comparative Example |
| 21 | 100 | 5 | 12 | 10 | Comparative Example |
| 22 | 100 | 5 | 12 | 10 | Comparative Example |
| 23 | 100 | 5 | 12 | 10 | Comparative Example |
| 24 | 100 | 5 | 12 | 10 | Comparative Example |
| 25 | 100 | 5 | 12 | 10 | Comparative Example |
| 26 | 100 | 5 | 12 | 10 | Comparative Example |
| 27 | 100 | 5 | 12 | 10 | Comparative Example |
| 28 | 100 | 5 | 12 | 10 | Comparative Example |
| 29 | 100 | 5 | 20 | 10 | Comparative Example |
| 30 | 100 | 5 | 6 | 10 | Comparative Example |
| 31 | 100 | 5 | 2 | 10 | Comparative Example |
| 32 | 100 | 26 | 8 | 1.0 | Comparative Example |
| 33 | 100 | 30 | 10 | 1.0 | Comparative Example |
| 34 | 20 | 5 | 10 | <0.2 | Comparative Example |
| 35 | 100 | 5 | 12 | 1.0 | Comparative Example |
| 36 | 100 | 5 | 12 | 1.0 | Comparative Example |
| 37 | 100 | 5 | 12 | 10 | Comparative Example |
| 38 | 100 | 5 | 10 | 1.0 | Comparative Example |
| 39 | 100 | 5 | 10 | 0.8 | Comparative Example |

The thick steel plates 1 having the groove shapes shown in Table 2 had a length of 500 mm in the welding direction WD. Then, narrow-gap gas-shielded arc welding was performed thereon using welding wires corresponding to the steel types (grades) shown in Table 1 under the welding conditions shown in Tables 3 and 4 as the first-layer welding 21. Next, multi-layer welding including the second-layer welding 22 and the welding of the following layer(s) was performed to obtain a narrow-gap gas-shielded arc weld joint with a weld length of 500 mm. Note that the welding conditions for the second-layer welding 22 and the welding of the following layer(s) were the same the welding conditions as those for the first-layer welding 21. When the third electrode 5 and subsequent electrode(s) were used, all of the electrodes were arranged in the center of the groove behind the first electrode 3 and the second electrode 4 in the welding direction WD.

Each of the obtained weld joints was cut along five cross-sections in the longitudinal direction. Then, the melt width W at the bottom was measured for each cross-section as shown in Fig. 3. For each cross-section, the length of the gap G at the groove bottom was subtracted from the obtained melt width W, and the resulting value was divided by 2 so that the obtained value was determined as the melt depth along the cross-section. Then, the mean value of the five cross-sections was determined as the melt depth p at the bottom of the weld joint. Table 4 shows the obtained results. In addition, the presence or absence of hot cracks was also inspected during the observation of the cross-section. Table 4 shows the results.

Further, ultrasonic tests were performed on the obtained weld joints to evaluate the presence or absence of welding defects. When no defect is detected, the test result is indicated by "Excellent." When the length of detected defects is 3 mm or less, which is within an acceptable level, the test result is indicated by "Good." When the length of one or more of detected defects is more than 3 mm, the test result is indicated by "Poor." Table 4 also shows the results.

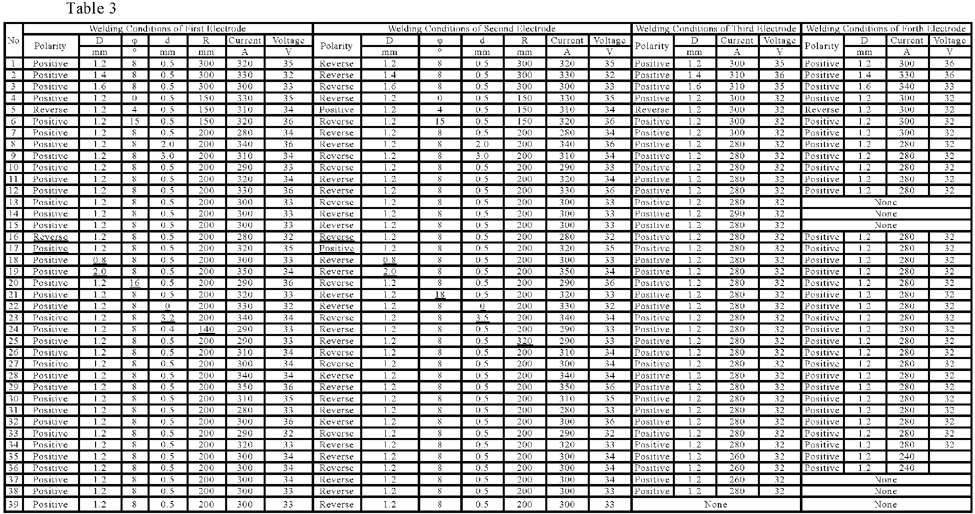

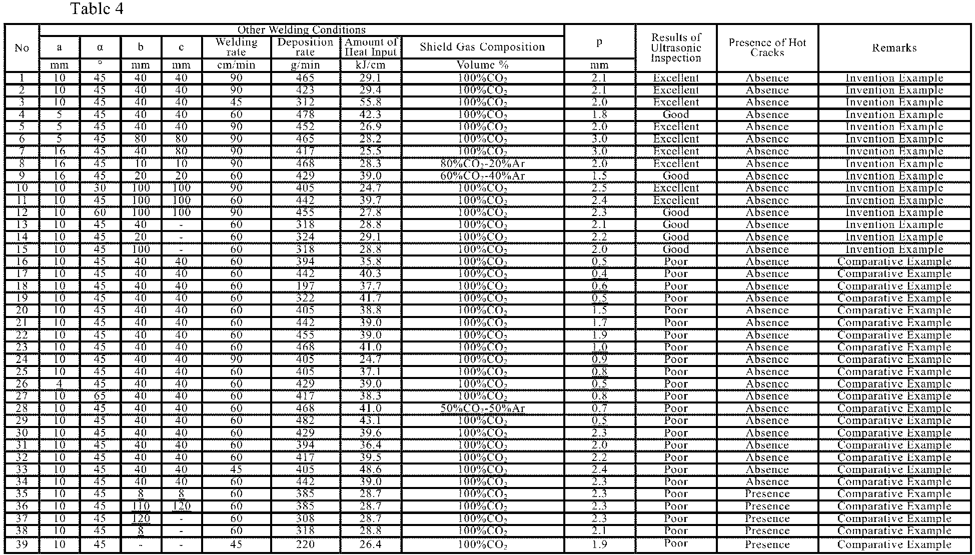

All the invention examples, which were subjected to narrow-gap multi-layer welding by multi-electrode welding with three or more electrodes, have the melt depth p at the bottom of 1.5 mm or more and no hot cracks. Further, no welding defect occurred with the groove surfaces 2 untreated. Thus, a high-quality narrow-gap gas-shielded arc weld joint was obtained, and the welding efficiency was improved. On the other hand, in the comparative examples, in which one or more of the conditions were outside the range of the present invention, the melt depth p at the bottom was found to be less than 1.5 mm, or the occurrence of hot cracks was recognized, or unacceptable welding defects were detected. Thus, a high-quality narrow-gap gas-shielded arc weld joint was not obtained.

### Reference Signs List

1 thick steel plate
2 groove surface
3 first electrode
3a, 4a, 5a, 6a power feed tip
3b, 4b, 5b, 6b welding wire
4 second electrode
5 third electrode
6 fourth electrode
7 backing material
8 weld line
9, 10, 11, 12 welding power supply
20 molten pool
21 first layer (welding)
22 second layer (welding)
81 center line of groove
a distance (between first and second electrodes)
b distance (between second and third electrodes)
c distance (between third and fourth electrodes)
d distance (between wire and groove surface)
G gap of groove (at the bottom)
W melt width (at the bottom)
WD welding direction
θ angle of groove

## Claims

1. A narrow-gap gas-shielded arc welding method for joining thick steel plates each having a thickness t of 22 mm or more and forming a groove angle θ of 25° or less and a gap G at a groove bottom in a range of 7 to 18 mm, using narrow-gap multi-layer welding, **characterized by** comprising
performing multi-electrode welding with three or more electrodes as the multi-layer welding;
arranging, among the multiple electrodes, a first electrode and a second electrode at positions along predetermined parallel weld lines;
setting one of the first electrode and the second electrode to positive polarity, and setting the other to reverse polarity;
setting a distance a between distal ends of welding wires fed from power feed tips provided at distal ends of respective welding torches of the first electrode and the second electrode to a range of 5 to 16 mm and setting an angle α between a straight line that connects the distal ends of the respective welding wires of the first electrode and the second electrode and a direction perpendicular to the weld lines to a range of 60° or less;
setting a diameter of the welding wire used for each electrode of the multiple electrodes to a range of 1.0 to 1.6 mm;
setting a distance between adjacent electrodes selected from the second electrode and subsequent electrodes among the multiple electrodes to a range of 10 to 100 mm;
optionally, setting a feed angle φ of each of the welding wires fed to the groove bottom from the respective power feed tips of the first electrode and the second electrode to a range of 0 to 15° with respect to a line perpendicular to the groove bottom;
optionally, setting a distance d between each of side end portions at the distal ends of the respective welding wires fed from the first electrode and the second electrode and each of groove surfaces of the thick steel plates to a range of 0.5 to 3.0 mm; and
setting a total amount of deposited metal per unit time by all electrodes to 200 g/min or more and setting a melt depth p at the bottom of each thick steel plate in the direction perpendicular to the weld lines to 1.5 mm or more.

2. The narrow-gap gas-shielded arc welding method according to claim 1, further comprising arranging a third electrode and subsequent electrodes in a center of the groove behind the first electrode and the second electrode.

3. The narrow-gap gas-shielded arc welding method according to claim 1 or 2, further comprising feeding welding wires, each curved to have a curvature radius in a range of 150 to 300 mm, to the respective power feed tips of the first electrode and the second electrode.

4. The narrow-gap gas-shielded arc welding method according to claim 1 or 2, further comprising using a mixed gas containing 60 volume% or more CO₂ gas as a shielding gas for the multi-layer welding.

5. A welding apparatus for performing narrow-gap gas-shielded arc welding that performs narrow-gap multi-layer welding on thick steel plates, each having a thickness t of 22 mm or more and having a groove angle θ of 25° or less and a gap G at a groove bottom in a range of 7 to 18 mm, **characterized by** comprising
a plurality of electrodes including three or more electrodes;
a plurality of welding power supplies that supply welding power to the respective electrodes;
power feed tips provided at distal ends of welding torches of the respective electrodes; a plurality of welding wire feeding means for feeding welding wires to the respective electrodes; shielding gas feeding means for feeding a shielding gas; and
a welding base or a welding carriage,
wherein,
among the plurality of electrodes, a first electrode and a second electrode are connected such that one of the first electrode and the second electrode is set to positive polarity and the other is set to reverse polarity;
each power feed tip is configured to feed a welding wire in a range of 1.0 to 1.6 mm;
the first electrode and the second electrode are arranged at positions along predetermined parallel weld lines, and are also arranged such that a distance therebetween is in a range of 5 to 16 mm as a distance a between distal ends of the welding wires fed from the power feed tips provided at the distal ends of the welding torches of the respective electrodes, and are further arranged such that an angle α between a straight line connecting the distal ends of the welding wires fed from the power feed tips provided at the distal ends of the respective welding torches of the first electrode and the second electrode and a direction perpendicular to the weld lines is 60° or less;
a third electrode and subsequent electrodes are arranged such that a distance between adjacent electrodes selected from the second electrode and subsequent electrodes is in a range of 10 to 100 mm; and
optionally, the power feed tips provided at the distal ends of the respective welding torches of the first electrode and the second electrode are each inclined at an angle in a range of 0 to 15° with respect to a perpendicular line at the distal ends.

6. The welding apparatus for performing narrow-gap gas-shielded arc welding according to claim 5, wherein
the third electrode and subsequent electrodes are arranged in a center of the groove behind the first electrode and the second electrode.

7. The welding apparatus for performing narrow-gap gas-shielded arc welding according to claim 5 or 6, wherein
the welding wire feeding means is configured to be able to feed welding wires each curved to have a curvature radius in a range of 150 to 300 mm.

8. The welding apparatus for performing narrow-gap gas-shielded arc welding according to claim 5 or 6, wherein
the shielding gas feeding means is configured to feed a mixed gas containing 60 volume% or more CO₂ gas as a shielding gas.
